# EUROPÄISCHE PATENTANMELDUNG

(11) **EP 2 899 174 A2**
(43) Veröffentlichungstag der Anmeldung: **29.07.2015**
(21) Anmeldenummer: 15150005.5
(22) Anmeldetag: 02.01.2015
(51) Int. Cl.: C04B 28/02, E04F 21/08, E04C 1/41

(54) **Verfahren zum Verbessern der Wärmeisolation von bestehenden Bauwerken oder Neubauten und von Bausteinen mit Hohlräumen, sowie mit dem Verfahren behandelte Bausteine**

(30) Priorität: 07.01.2014 CH 92014
(71) Anmelder: ADT Aero Dämm Technik GmbH, 79379 Müllheim (DE)
(72) Erfinder: Maier, Martin, 79258 Hartheim-Bremgarten (DE)
(74) Vertreter: Felber, Josef

(57) **Zusammenfassung**

Nach diesem Verfahren zum Verbessern der Wärmeisolation von bestehenden Bauwerken und Neubauten werden glasierte, an ihrer Oberfläche geschlossene, mit Luft gefüllte Kugeln aus expandiertem Silicasand bzw. geblähtem Perlit mittels Dünnstromförderung mittels eines Pumpwagens (1) mit Schlauch (3) und Düse (4) in die Hohl- und Zwischenräume (5,6,7) eines bestehenden Bauwerkes eingeblasen und diese werden so verfüllt. In einer Variante werden diese Kugeln in Kombination mit zementösen Bindemitteln mittels Dickstromförderung in diese Hohl- und Zwischenräume gepumpt. Die Bausteinen mit Hohl- und Zwischenräumen werden ebenfalls für ihr Isolationsvermögen behandelt, indem ein Gemisch aus zementösen Bindemitteln und expandiertem Silicasand bzw. geblähtem Perlit in die Hohl- und Zwischenräume gepumpt werden und diese damit verfüllt werden. Diese verfüllten Bausteine weisen trotzdem ein praktisch unverändertes Gewicht auf, sind jedoch viel wärmeisolierender als ohne Verfüllung.

## Beschreibung

Diese Erfindung betrifft ein Verfahren, um die Wärmeisolation von bestehenden Bauwerken sowie Neubauten, namentlich auch von sonst schwer sanierbaren Altbauten zu verbessern. Desweitern betrifft sie das im Prinzip das gleiche Verfahren, um bestehende Bausteine, soweit diese Hohlräume oder leere Zwischenräume aufweisen, mit dem Ziel einer verbesserten Wärmeisolation zu behandeln, und schliesslich betrifft die Erfindung diese Bausteine an und für sich als Erzeugnisse bzw. Produkte.

Altbauten sind zwar oftmals schön - manchmal eigentliche Baudenkmäler - aber sie weisen meist eine schlecht isolierende Bauhülle auf und sind allgemeinen schwer nachträglich zu isolieren. Die Entwicklung effizienter Isoliersysteme, etwa eines gut isolierenden Dämmputzes oder gut isolierender Dämmplatten ist daher eine Herausforderung. Heute gibt es Dämmputze und Dämmplatten auf der Basis von Aerogel, die doppelt so gut isolieren wie sonst übliche Dämmputzsorten. Der Referenzwert für die Isolation ist der Wärmedurchlass und dieser wird als Lambda-Wert (λ) ausgedrückt. Aerogel-Dämmputze weisen einen Lambda-Wert von 30 mW/mK auf, als reiner Laborwert, und Dämmplatten einen solchen von 12 bis 15 mW/mK. Dämmplatten sind daher wesentlich effizienter. Dazu kommt, dass der Aerogel-Dämmputz, wenn er gepumpt wird, seine Wirkung teilweise verliert, weil der Aerogel durch die Pumpe mechanisch gestresst wird.

In der Schweiz als Beispiel gibt es etwa 1.5 Millionen Altbauten. Mit dieser Bausubstanz muss gelebt werden, ja man will sie oft bewusst erhalten. Doch zugleich steigt der Energieverbrauch des Landes. 4.5 Millionen Tonnen leichtes Heizöl und 3 Millionen Kubikmeter Erdgas werden laut dem Schweizer Bundesamt für Energie jährlich importiert. 43 Prozent davon werden für das Heizen von Gebäuden verbrannt. Um sparsamer mit diesen Energieträgern umzugehen, führt kein Weg um eine bessere Isolation dieser alten Häuser herum.

Wie dämmt man einen historischen Altbau - sei es nun ein Riegelhaus, ein Haus aus der Art-Deco-Epoche, oder ein altes Bürgerhaus? Der Heimatschutz erlaubt es nicht, historische Fassade einfach mit modernen Dämmplatten einzupacken.

Um die Optik einer alten Hauswand zu erhalten, eignet sich ein Verputz am besten. Das Auskleiden von verwinkelten Treppenhäusern, Rundbögen und Stützmauern mit herkömmlichen dicken Dämmplatten ist zuweilen aufwändig. Eine Verkleidung aus Dämmputz lässt sich besonders an verwinkelten Bereichen entschieden einfacher anbringen. Ausserdem liegt der Putz direkt auf dem Mauerwerk auf und lässt keine Lücken frei, in denen Feuchtigkeit kondensieren kann. In der Praxis greift man deshalb oft auf Kombinationen von Dämmplatten und Dämmputzen zurück. Grosse, ebene Flächen werden mit Dämmplatten verkleidet, verwinkelte Bereiche des Baukörpers hingegen mit Dämmputz versehen.

Einer der besten, wenn nicht der allerbeste Dämmstoff, der industriell hergestellt werden kann, ist Aerogel. Das Material, wegen seiner Optik auch als «gefrorener Rauch» bekannt, besteht zu rund 5 Prozent aus Silikat - der Rest ist Luft. Aerogel wurde bereits in den Sechzigerjahren zur Isolation von Raumanzügen eingesetzt und brachte es auf 15 Einträge im Guinness-Buch der Rekorde, darunter denjenigen als «bester Isolator» und «leichtester Feststoff». Tatsächlich sind Aerogel-Kügelchen extrem leicht, fast gewichtslos und sie lassen sich zwischen Daumen und Zeigefinger festhalten. Doch sobald man die Finger reibt, zerbröseln sie. Nach zwei, drei Bewegungen ist nur noch ein feines Pulver übrig. Wenn das Pulver sachte mit Wasser angerührt wird und der damit versetzte Putz von Hand auftragen wird, lassen sich zwar gute Ergebnisse erzielen, aber wenn der Putz mit einem Druck von 5 bis 20 bar durch den Schlauch einer professionellen Putzmaschine gepumpt wird, so zerstört die mechanische Beanspruchung den Aerogel und seine isolierende Wirkung. Aerogel müsste daher in so einer Weise in den Putz integriert werden, dass seine Wirkung auch beim maschinellen Pumpen des Dämmputzes erhalten bleibt. Laborproben dieses von der Eidgenössischen Material-Prüfungs-Anstalt EMPA in CH-Dübendorf entwickelten Aerogel-Putzes ergaben eine Wärmeleitfähigkeit λ von 30 mW/(mK). Damit wäre dieser Aerogel-Dämmputz mehr als doppelt so gut isolierend wie ein herkömmlicher Dämmputz und vergleichbar oder gar noch besser isolierend als eine Platte aus extrudiertem Polystyrol (EPS). Die herkömmlichen Dämmputze weisen Lambda-Werte zwischen 65 und 90 mW/(mK) auf, die schlechtesten bloss einen λ-Wert von 110 oder 130 mW/(mK) auf. Zur praktischen Applikation wird der Aerogel-Dämmputz mit einer Verputzmaschine auf das Mauerwerk aufgespritzt und anschliessend glatt gezogen. Dieser weiche Dämmputz muss anschliessend in einem weiteren Arbeitsgang mit einem gewebearmierten Einbettmörtel geschützt werden. Es hat sich allerdings gezeigt, dass ein Aerogel als gepumpter Putz aufgebracht, deutlich mehr Wärme durchlässt, vor allem wenn die Pumpstrecke lang ist. Aufgrund der mechanischen Beanspruchung des Aerogels in der Pumpe fällt seine Wirkung zusammen und der Lambda-Wert steigt. Bei einer 30 Meter langen Pumpleitung steigt der Wärmedurchlass und somit der Lambda-Wert von sonst 30 auf 40 bis 45 mW/mK.

Wärmedämmplatten andererseits erleiden durch ihre Montage keine Verschlechterung ihres λ-Wertes. Eine Aerogel-Platte bringt einen λ-Wert von 15 bis 20 mW/mK, ist also besser als eine extrudierte Polystyrol Platte (EPS-Platte) mit ihrem λ-Wert von 33 mW/mK. Wenngleich nicht überall Wärmedämmplatten einsetzbar sind, so sind solche doch in vielen Situationen ideal, denn sie bieten einen tiefen λ-Wert. Aerogel-Platten oder Aerogel-Dämmputze sind im allgemeinen sehr teuer.

Im Markt bekannt sind veredelte Perlite, das heisst mit Spezialbitumen ummantelte Perlite in Granulatform - bekannt als Bituperl^{®}. Die Ummantelung mit Bitumen oder mittels Imprägnierung mit Hydrophoben ist nötig, um die Wasseraufnahmefähigkeit der Perlite zu unterbinden. Mit diesem vielseitig verwendbaren Granulat-Produkt lassen sich unter anderem Trockenschüttungen ausführen. Es gibt zum Beispiel eine Universalschüttung für Fussböden, die eine Dichte von bloss 165kg/m³ aufweist. Die Verarbeitungseigenschaften dieses Bituperl^{®}-Granulates zeichnen sich durch einen leichten Flächendruck aus, und das Granulat kann zu einer stabilen, homogenen und hocheffizienten Dämmschicht verdichtet werden. Bituperl^{®} eignet sich daher vor allem für Rohdecken, deren Schüttungsbelastung minimal gehalten werden soll. Das ist beispielsweise bei Holzbalkendecken wichtig. Bisher werden Hohlräume in Dächern und Wandkonstruktionen zum Beispiel auch mit Styroporkügelchen gefüllt, durch Einblasen derselben mittels Pressluft aus einem Schlauch. Dieses Füllmaterial ist allerdings brandtechnisch gesehen suboptimal.

Interessant wäre daher ein Verfahren, um auf der Basis von geschlossenporigen, wasserdichten Perliten bestehende Bauwerke generell nachträglich besser isolieren zu können, oder auch Neubauten damit besser zu isolieren, und auch um gebräuchliche Bausteine so behandeln zu können, dass sie eine wesentlich bessere Wärmeisolation bieten.

Die Aufgabe dieser Erfindung ist es daher, ein Verfahren zu schaffen, mittels dessen bestehende Bauwerke oder Neubauten, und insbesondere Altbauten für die Sanierung nachträglich behandelbar sind, sodass deren Wärmeisolation wesentlich verbessert wird, ein besseren Brandschutz gegenüber herkömmlichen Isolationen aus Styropor erzielt wird, sowie die Wasseraufnahmefähigkeit im Vergleich zu offenporigen Perliten reduziert wird. Das Verfahren soll dabei einfach und sicher in der Anwendung sein, und ausserdem zu konkurrenzfähigen Preisen ausführbar sein.

Ausserdem ist es eine Aufgabe der Erfindung, ein solches Verfahren in der Vorfabrikation auch auf bestehende Bausteine anzuwenden, das heisst auf Bausteine, die Hohlräume oder Zwischenräume aufweisen, sodass die behandelten Bausteine eine verbesserte Wärmeisolation bieten.

Schliesslich ist es eine Aufgabe der Erfindung, solche vorfabrizierten Bausteine mit verbesserter Wärmeisolation anzugeben, die nach diesem Verfahren behandelt sind.

Die Aufgabe wird gelöst von einem Verfahren zum Verbessern der Wärmeisolation von bestehenden Bauwerken und Neubauten, das sich dadurch auszeichnet, dass glasierte, an ihrer Oberfläche geschlossene, mit Luft gefüllte Kugeln aus expandiertem Silicasand bzw. geblähtem Perlit mittels Dünnstromförderung in die Hohl- und Zwischenräume eines bestehenden Bauwerkes eingeblasen werden, oder diese Kugeln oder in Kombination mit zementösen Bindemitteln mittels Dickstromförderung in diese Hohl- und Zwischenräume gepumpt werden.

Die Aufgabe wird weiter gelöst von einem Verfahren zum Verbessern der Wärmeisolation von Bausteinen mit Hohlräumen, das sich dadurch auszeichnet, dass glasierte, an ihrer Oberfläche geschlossene, mit Luft gefüllte Kugeln aus expandiertem Silicasand bzw. geblähtem Perlit mit zementösen Bindemitteln mittels Dickstromförderung in die Hohl- und Zwischenräume der Bausteine gepumpt werden und diese Hohl- und Zwischenräume damit komplett verfüllt werden.

Diese Aufgabe wird schliesslich gelöst von Bausteinen mit Hohlräumen oder Zwischenräumen, die sich dadurch auszeichnen, dass ihre Hohl- und Zwischenräume mit einem Gemisch aus glasierten, an ihrer Oberfläche geschlossenen, mit Luft gefüllten Kugeln aus expandiertem Silicasand bzw. geblähtem Perlit und zementösen Bindemittel komplett verfüllt sind.

Die Verwendung dieser durch die Glasierung geschlossenporigen Perlite (Aeroball) als Isolationsstoff geschieht also durch Einblasungen (Dünnstromförderung) oder Einpumpen (Dickstromförderung), indem die glasierten Perlite beispielsweise durch Einblasen, evtl. auch mit Saugunterstützung in einen Hohlraum eingebracht werden. Diese Anwendung ist für die Sanierung von alter bestehender Bausubstanz sowie auch für den Neubau (Trockenbau) sehr interessant. Andererseits kann dieses Verfahren zum Vorfabrizieren von Bausteinen, etwa Backsteinen eingesetzt werden, indem deren Hohl- und Zwischenräume werkseitig mit einem Gemisch aus glasiertem Aeroball und zementösen Bindemitteln verfüllt und mit einem Kleber, beispielsweise einem Zement, Kalk, mit Wasserglas oder einem Produkt mit ähnlichen Eigenschaften verschlossen bzw. versiegelt werden. Die Wärmedämmwirkung des Mauersteines wird damit massgeblich verbessert.

Anhand der Zeichnungen wird das Verfahren in seiner Anwendung dargestellt und nachfolgend erläutert.

Es zeigt:
- Figur 1 :: Das Einbringen von glasierten Perliten in die Hohl- und Zwischenräume eines Altbaus;
- Figur 2 :: Das Einbringen von glasierten Perliten in die Hohl- und Zwischenräume eines Bausteins;
- Figur 3 :: Ein vorfabrizierter Baustein mit Zwischenräumen, die mit glasierten Perliten verfüllt sind.

Rohperlit ist ein chemisch und physikalisch umgewandeltes, vulkanisches Gestein (Obsidin) mit weissem, pudrigem Aussehen. Der rohe Perlit enthält bis 2% Wasser und weist eine Dichte von 900-1'000 kg/m³ auf. Gemäss einem Verfahren mit mehrstufigem Glühen auf Temperaturen von ca. 800°C bis 1'400°C bläht sich Perlit auf das 10-15fache Volumen auf. Die Dichte des Blähproduktes beträgt dann bloss noch 80-120 kg/m³, weist also ein sehr aussergewöhnlich leichtes Gewicht auf. Das Blähen von Perlit ist seit Jahren bekannt. Die bisherige Blähmethode führt aber zu offenzelligen, zerrissenen Perliten. Heute können Perlite mit einem mehrstufigen Verfahren so hergestellt werden, dass sie geschlossene, glasierte Hohlkugeln bilden, also geschlossenzellige, intakte Perlitkügelchen. Dabei wird der Perlitsand zunächst mittels einer Sieblinie in verschiedene Korngrössen sortiert. Jede einzelne Korngrösse wird anschliessend in einem Rieselkanal mit mehrstufigen Temperaturzonen ansteigender Temperaturen aufgebläht und damit die Oberfläche der Kugeln verglast. Übliche in dieser Weise erzeugte Korngrössen sind:
- 0.1 mm bis 0.5mm
- 0.5mm bis 0.8mm
- 0.8mm bis 1.0mm
- 1.0mm bis 2.0mm
Diese neuartigen, glasierten Kugeln haben eine im Gegensatz zu zerrissenem Perlit sehr geringe Wasseraufnahme-Fähigkeit. Um offenzellige Perlite in Bezug auf die Wasseraufnahmefähigkeit zu verbessern, wurden diese bisher ummantelt, beispielsweise mit Bitumen. Eine andere Variante besteht darin, offenzellige Perlite mit Paraffin zu imprägnieren oder mit Silikon zu veredeln und sie für Schüttungen zu verwenden. Mit dem neuartigen, aber bereits bekannten Verfahren sind bei Oberflächen-verglasten Perliten keine Veredelungs-Massnahmen mit Imprägnieren mehr notwendig, da das Produkt kein Wasser aufnimmt.

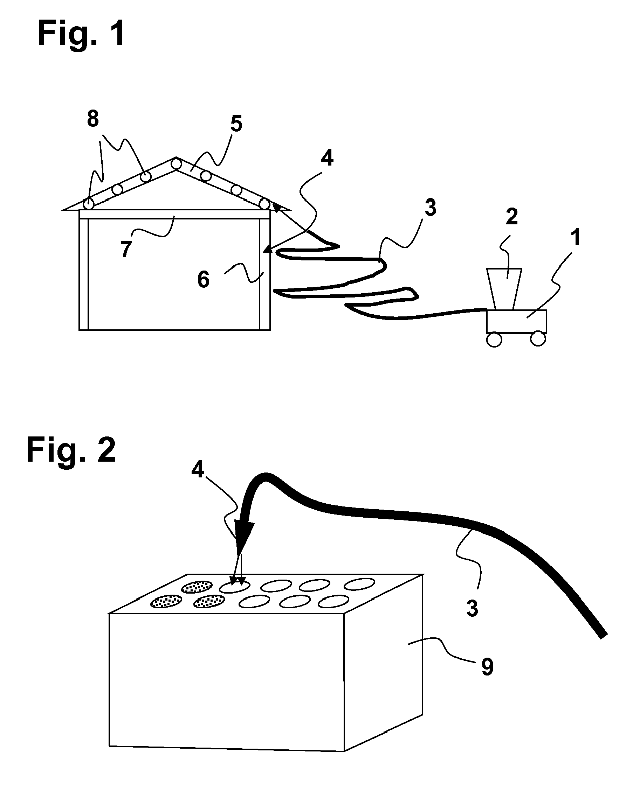

Um Hohlräume in Gebäuden zu verfüllen, sei es in Dächern, in Wänden, oder in Böden, werden nun glasierte und somit an ihrer Oberfläche geschlossene, mit Luft gefüllten Kugeln, die durch Expandieren von Silicasand bzw. durch Blähen von Perlit entstehen, in diese Hohlräume mittels eines Dünnstromverfahren gepumpt. Diese Kugeln unterschiedlichen Durchmessers weisen ein spezifisches Gewicht von bloss ca. 80-120kg/m³ auf. Sie sind also extrem leicht und enorm wärmeisolierend, mit einem λ-Wert von 20 bis 35mW/mK, und somit vergleichbar mit jenem einer viel teureren Aerogel-Platte. Insgesamt aber bleibt eine solche Verfüllung luft- bzw. dampfdurchlässig. In Figur 1 ist dargestellt, wie diese geblähten und geschlossenporigen Perlite appliziert werden. Die Perlite werden durch einen Trichter 2 in einen Pumpenwagen 1 eingefüllt, in welchem sich eine Druckluftpumpe befindet. Die Perlite werden vom Luftstrom erfasst und durch den Schlauch 3 mitgerissen und gefördert, bis sie an der Düse 4 austreten und in einen Hohlraum eines Gebäudes eingeblasen werden können, hier in die Zwischenräume 5 zwischen den Pfetten 8 eines Dachstockes. In gleicher Weise können die Perlite auch in die Zwischenräume 6 zwischen Aussen- und Innenwänden gepumpt werden, oder in die Zwischenräume 7 von Holzbodenaufbauten. Das Einpumpen kann bedarfsweise unterstützt werden, indem Luft aus den Zwischenräumen 5,6,7 auf der Gegenseite des Einblasens abgesaugt wird.

Die Figur 2 zeigt das Einbringen von glasierten Perliten in die Hohl- und Zwischenräume eines Bausteins 9. Hierfür werden die glasierten Perlite mit einer zementösen Bindemitteln gemischt, und hernach wird dieses Gemisch in einem Dickstromverfahren durch Pumpen als pastöse Masse in die Hohl- und Zwischenräume von Bausteinen eingepumpt und glattgestrichen sodass diese Hohl- und Zwischenräume komplett mit dem Gemisch verfüllt sind. Die zementösen Bindemittel härten aus und halten die Perlite in Position, sodass die Verfüllung im Innern der Bausteine stabil bleibt. Der Dämmputz wird vom Pumpenwagen 8 unter Zugabe von Wasser in einem idealen Verhältnis gepumpt, sodass er an der zu isolierenden Wand haftet. Die Drucke betragen dann bis zu 8 bar und es lassen sich Pumpstrecken von bis zu 20 Metern und mehr überwinden, ohne die Qualität des Dämmputzes wesentlich zu verschlechtern. Der applizierte Dämmputz bleibt dampfdurchlässig und weist einen λ-Wert von ca. 40 bis 50 mW/mK auf. Es muss daher eine weit weniger starke Dämmschicht aufgespritzt werden als herkömmlich. Es kommt dazu, dass dieser Perlit-Dämmputz deutlich kostengünstiger herstellbar ist als Aerogel-Dämmputz. Dieser weiche Perlit-Dämmputz wird anschliessend in einem weiteren Arbeitsgang mit einem gewebearmierten Einbettmörtel geschützt. Die so behandelte und beschichtete Wand kann hernach mit einer offenporigen Silikat Farbe bestrichen werden und der Schichtaufbau bleibt dampfdurchlässig, ist jedoch hoch wärmeisolierend. Das Pumpen erfolgt in diesem Fall im Dickstromverfahren, mittels einer Schnecken-Förderpumpe mit einem weichelastischen, flexiblen, von aussen mit Druck beaufschlagbaren Pumpenzylinder. Das Perlit-Bindemittel-Gemisch wird vom Pumpenwagen in einem idealen Verhältnis gepumpt, sodass es pastös ist und sich gut in die Bausteine verfüllen lässt. Hernach werden die Bausteine glattgestrichen. Für diese Pumpen können die Drucke bis zu 8 bar betragen und es lassen sich Pumpstrecken von bis zu 20 Metern und mehr überwinden, ohne die Qualität des Perlit-Bindemittel-Gemisches wesentlich zu verschlechtern.

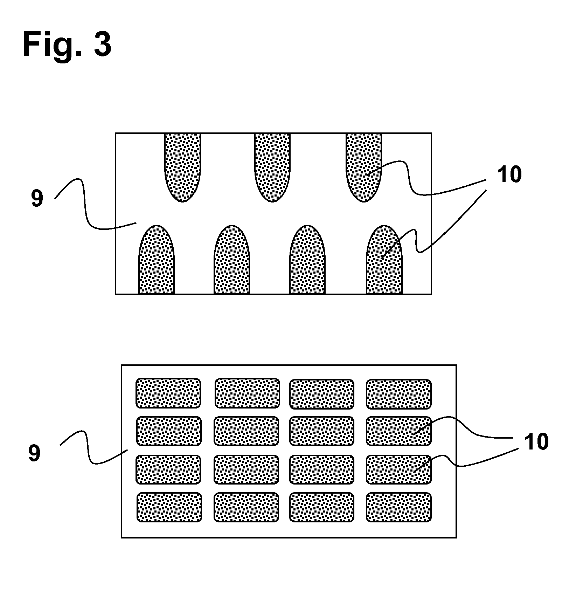

In Figur 3 sind zwei solche mit Perlit und zementösem Bindemittel verfüllt Bausteine 9 dargestellt. Egal wie der Baustein geformt ist, - sobald er einen Zwischenraum 10 oder auch einen Hohlraum aufweist, so können diese Räume verfüllt werden. Dadurch wird die Isolationswirkung eines derart behandelten Bausteins wesentlich verbessert, wobei sein Gewicht und seine Stabilität praktisch unverändert bleibt und auch seine Handhabung beim Verbauen keine Änderung erfährt. Eine mit solchen Bausteinen erstellte Wand kann hernach je nach Wunsch auch als Unterlage für eine Tapezierung dienen, oder mit einer Struktur für das gewünschte Raumambiente versehen werden, oder aber auch einen offenporigen Anstrich mit vorzugsweise einer Silikatfarbe erhalten. In jedem Fall bleibt der ganze Aufbau auf der Wand dampfdurchlässig. Es wird damit eine aussergewöhnlich gute Wärmeisolation mit hervorragendem λ-Wert erzeugt.

Traditionelle Wärmedämmputze werden in der Praxis üblicherweise in Schichtstärken von 30mm bis 80mm als Innen- oder Aussenputze aufgebracht. Bei Wänden mit diesen neu verfüllten Bausteinen kann diese Schichtdicke wesentlich reduziert werden. Entsprechend kann die Gesamtschichtstärke des Wandaufbaus massgeblich reduziert werden. Die Räume werden dadurch entsprechend länger. Eine Austrocknungszeit von etwa 30 Tagen - wie für übliche Wandaufbauten mit Dämmputzen von 30mm Stärke nötig - muss nicht abgewartet werden, denn diese fällt infolge der dünnen Schichtstärke der Isolation viel kürzer aus.

## Patentansprüche

1. Verfahren zum Verbessern der Wärmeisolation von bestehenden Bauwerken und Neubauten, **dadurch gekennzeichnet, dass** glasierte, an ihrer Oberfläche geschlossene, mit Luft gefüllte Kugeln aus expandiertem Silicasand bzw. geblähtem Perlit mittels Dünnstromförderung in die Hohl- und Zwischenräume (5,6,7) eines bestehenden Bauwerkes eingeblasen werden, oder diese Kugeln oder in Kombination mit zementösen Bindemitteln mittels Dickstromförderung in diese Hohl- und Zwischenräume (5,6,7) gepumpt werden.

2. Verfahren zum Verbessern der Wärmeisolation von bestehenden Bauwerken und Neubauten nach Anspruch 1, **dadurch gekennzeichnet, dass** das Einpumpen durch unterstützendes Absaugen von Luft aus den Zwischenräumen (5,6,7) auf der Gegenseite des Einblasens erfolgt.

3. Verfahren zum Verbessern der Wärmeisolation von Bausteinen (9) mit Hohlräumen, **dadurch gekennzeichnet, dass** glasierte, an ihrer Oberfläche geschlossene, mit Luft gefüllte Kugeln aus expandiertem Silicasand bzw. geblähtem Perlit mit zementösen Bindemitteln mittels Dickstromförderung in die Hohl- und Zwischenräume (10) der Bausteine (9) gepumpt werden und diese Hohl- und Zwischenräume (10) damit komplett verfüllt werden.

4. Baustein (9) mit Hohlräumen oder Zwischenräumen (10), **dadurch gekennzeichnet, dass** seine Hohl- und Zwischenräume (10) mit einem Gemisch aus glasierten, an ihrer Oberfläche geschlossenen, mit Luft gefüllten Kugeln aus expandiertem Silicasand bzw. geblähtem Perlit und zementösen Bindemitteln komplett verfüllt sind.
